# EUROPEAN PATENT APPLICATION

(11) **EP 4 481 322 A1**
(43) Date of publication of application: **25.12.2024**
(21) Application number: 23180346.1
(22) Date of filing: 20.06.2023
(51) Int. Cl.: G01B 11/25

(54) **METHOD FOR PERFORMING A QUALITY CONTROL OF A COMPONENT OF A WIND TURBINE TO BE PRODUCED**

(71) Applicant: Siemens Gamesa Renewable Energy A/S, 7330 Brande (DK)
(72) Inventor: Elmose, Søren Forbech, 7441 Bording (DK)
(74) Representative: SGRE-Association

(57) **Abstract**

Method for performing a quality control of a component of a wind turbine to be produced, wherein geometry data which provide a 3D-model of an actual shape of at least a part of the component are collected using a measuring device being a non-contact 3D-scanner, wherein deviations between the actual shape and an ideal shape of the at least one part of the component are detected using the geometry data.

## Description

The present invention relates to a method for performing a quality control of a component of a wind turbine to be produced.

Regarding components of wind turbines, particularly bearings or members of bearings, the tolerance of the shape of these components can be crucial. This will be explained exemplarily with the help of the case where the component is a ring of a contact ball bearing or contact roller bearing. Such rings typically comprise a raceway where balls or rollers are guided. Hence, the correct shape of the profiles of the raceway ensures that excessive contact pressures are avoided. If the respective shape deviates too much from an ideal shape, a blockage of the bearing or at least an excessive wear and, hence, a reduced lifetime of the bearing can occur. As a consequence, it is extremely important to perform a quality control regarding the tolerances of the geometry or shape of the component. Currently, several approaches to perform respective quality controls are known.

One approach is to gain the three-dimensional shape or geometry of the component by a coordinate measuring machine (CMM), wherein a direct or physical contact between the component and a sensor element of the CMM is needed. During the measurement, the component and the sensor element are moved relatively to each other, wherein displacements of the sensor element are used to collect the respective data. However, this approach is cumbersome, time-consuming, and costly.

Another approach regarding components being bearing rings with the raceway is the so-called bald sliding test. Here, a line is drawn across the raceway profile with a black marker. Next, a ball is slid by hand along the line. The line is worn off at positions where the ball is in contact with the raceway. Next, the rubbed-off parts of the line are measured by an angle gauge. However, the accuracy of this method, which is typically around +/- 2 deg, is relatively poor.

Another approach is to measure the friction torque on the component or within the raceway, wherein, for passing the respective quality control, the torque must not exceed a given limit. However, this test is performed without applied load and, hence, not under realistic conditions.

In the past, malfunctions, e.g., bearing blockages, have been observed despite the described tests have been performed and the respective quality controls have been passed. Hence, it is an object of the present invention to provide an enhanced concept for respective quality controls, particularly to ensure a sufficient reliability to prevent malfunctions.

According to the present invention, this object is achieved by a method as initially described, wherein geometry data which provide a 3D-model of an actual shape of at least a part of the component are collected using a measuring device being a non-contact 3D-scanner, wherein deviations between the actual shape and an ideal shape of the at least one part of the component are detected using the geometry data.

The geometry data describe the geometric shape or, in other words, the extents or dimensions of the component or, more precisely, of the outer surface of the component to provide the 3D-model. Hence, the 3D-model describes the actual, i.e., the real shape of the component. The gained 3D-model comprises a high data quality and allows for a fast processing. Hence, the present invention realizes a sophisticated approach to detect unwanted deviations between the actual shape and the ideal shape and, hence, possible defaults with respect to a given tolerance. Particularly, there is the possibility to automatize the data processing to simply the quality control. A simplification is further achieved by the fact that collecting data by the 3D-scanner requires a very low effort, particularly since a non-contact 3D-scanner is used such that no direct or physical contact between the component and a sensor element of the respective scanner is required.

Raw data obtained by the measuring device can be transferred to a computer for further processing, analyses and evaluations. A software which is implemented on the computer can be used for this process. The geometry data can be the raw data or gained by processing or preparing the raw data.

The ideal shape specifies a reference shape of the component. The actual shape equals the ideal shape if no deviations would be present or if the tolerance would be perfectly complied. The ideal shape can be provided or defined by the shape of an ideal geometric figure, e.g., a cuboid, a sphere, a cylinder, a cone, or a combination of these figures.

The component can be a bearing or a member of a bearing of the wind turbine. As it has already been described, particularly for these components it is crucial that the actual shape is within a given tolerance range. The bearing can be a blade pitch bearing, a main bearing or a yaw bearing for example. The blade pitch bearing acts as a mechanical interface between a hub and a blade of the wind turbine. An inner ring or an outer ring of the bearing can be attached to the hub and the blade can be attached to the respective other ring. The blade pitch bearing allows for rotating the respective blade around its longitudinal axis.

The member of the bearing being the component can be a ring of a contact ball bearing or of a contact roller bearing. These bearings typically comprise one or more inner rings and one or more outer rings which are arranged concentric to each other.

The ring can comprise at least one raceway which extends along a circumference of the ring, wherein the geometry data provide the 3D-model of the shape of the ring at least for a section of the ring where the at least one raceway is arranged. The raceway can be also called as a guiding groove and typically comprises a longitudinal direction which extends along the circumferential direction of the ring. At least one raceway is typically provided on an outer surface of the inner ring and at least one raceway is typically provided on an inner surface of the outer ring. Balls or rollers are arranged between the raceways being opposed to each other to allow a relative rotation of the rings around their central axes. Particularly, the ring or each of the rings comprises two raceways which extend parallel to each other.

Since the balls or rollers of the bearing are guided within the raceway, the respective sections of the ring comprising the raceway(s) are prone to be abraded if the geometric shape does not comply with the given tolerances. For contact ball bearings, the raceway typically comprises a circular shape. For contact roller bearings, the raceway typically comprises a rectangular shape.

The 3D-scanner used can be an optical scanner or a laser scanner. Hence, particularly electromagnetic, radiation which is reflected or emitted by the component is detected by the 3D-scanner, wherein the respective data is used to gain the geometry data.

The 3D-scanner can be an active scanner. In other words, the 3D-scanner can emit radiation which is reflected by the component, wherein the reflected radiation is detected by the 3D-scanner to obtain the geometry data. If the 3D-scanner is a laser scanner, the respective pulse transit time and/or phase differences can be used to obtain the geometry data. The 3D-scanner can be a passive scanner. In other words, the 3D-scanner can detect radiation which is reflected or emitted by the component which has not initially been created and emitted by the 3D-scanner. The radiation which is reflected by the component and not emitted by the 3D-scanner can be sunlight. The 3D-scanner being an optical scanner can comprise several optical cameras to obtain the geometry data being a three-dimensional picture of the component.

The 3D-scanner can be handheld or mounted on a stand during the collection of the geometry data. Preferably, a portable 3D-scanner is used such that no need to transport the component to a respective scanning location is required. During the scanning process, the handheld 3D-scanner can be guided along the component by scanning personnel. Alternatively, the 3D-scanner can be attached on the stand, particularly on a tripod or another suitable holding device.

Preferably, the geometry data consist of a point cloud and/or a polygon mesh. The points of the point cloud or nodal points of the polygon mesh can comprise three coordinates which correspond to the three spatial directions. The respective coordinates correspond to a specific reference coordinate system, wherein the origin of coordinates can be the location of the 3D-scanner or another suitable point in the space, for instance a central point of the component. For simplification, a transformation of coordinates can be performed, particularly to minimize the numbers which described the coordinates.

Preferably, the point cloud consists of data points which are arranged on a grid having a specified, particularly equally distributed, resolution. The data points can be provided by coordinates of a Cartesian coordinate system. The grid can be defined as evenly or equally distributed values regarding two coordinates, particularly the x- and the y-coordinate, wherein the third coordinate, particularly the z-coordinated, provides the position of the surface of the component. In other words, the data points can be evenly distributed regarding the x-y-plane.

The geometry data which provide the 3D-model of the actual shape of at least a part of the component being ring-like can be transformed into adjusted geometry data, wherein the adjusted geometry data provide an adjusted 3D-model of the actual shape of at least a part of the component. For transforming the geometry data into the adjusted geometry data, a circumferential rounding of the component can be turned into a straight extent. In this embodiment, the component is particularly the ring of the bearing which has been described above. The geometry data are transformed such that the circular shape of the component, particularly of the ring and, hence, of the raceway, is transformed into a straight shape. The relative positions between the data points, particularly of the points of the point cloud, and the points of the circumferential line can be held or kept. The adjusted geometry data are suitable for a simplified further processing or analysis, respectively.

At least one data subset which provides a 2D-model of the shape of at least a part of the cross section of the component is extracted from the geometry data or from data obtained by the geometry data, particularly from the adjusted geometry data, wherein the deviations are detected using the at least one data subset. The at least one data subset provides a slice or plane of the component which is suitable for a simplified further processing or analysis, respectively. Preferably, several data subsets are extracted, wherein the data subsets provide 2D-models of the shape of at least a part of the cross sections of the component along a certain direction, particularly longitudinal extent, of the component. If the component is ring-like, several data subsets can be extracted from the adjusted geometry data such that the data subsets provide 2D-models of the shape of at least a part of the cross sections of the component along the circumferential extent of the component.

Regarding the analysis of the geometry data, a function which describes the ideal shape can be fitted to the geometry data or to data obtained by the geometry data, particularly to the data subset or to the data subsets, wherein the results for the best fit are used to obtain the deviations. The fit can be performed by applying a method of minimizing the chi-square value. For the case of the component being the contact ball bearing, the function can describe a circle in the region of the at least one raceway. For the case of the component being the contact roller bearing, the function can describe a rectangle in the region of the at least one raceway. These geometric shapes are the ideal shapes for the raceway. Hence, preferably, the function which describes the desired cross-section of the at least one raceway is fitted to the part of the data subset describing the at least one raceway. Particularly if several parallel raceways are provided, the function can be defined section by section.

In a specific embodiment of the method according to the present invention, the deviations can be obtained by deviations between the geometry data or the data obtained by the geometry data and the best fit function. The deviations between the geometry data or the data obtained by the geometry data and the best fit function can be provided by the value of the, particularly reduced, chi-square. The larger the respective chi-square value, the larger is the deviation at the respective position. Particularly if several fits are performed for different longitudinal positions of the component, fits with a relatively large deviation between the respective data and the function indicate that there is a large deviation between the actual shape and the ideal shape at the respective longitudinal position. Hence, the deviations between the geometry data or the data obtained by the geometry data and the best fit function can be used to identify potentially problematic positions or sections of the component.

Additionally or alternatively, the deviations can be obtained by at least one best fit result of the best fit function. In this embodiment, the result for at least one fit parameter of the best fit function, particularly the deviation between this result and the expected value for the respective fit parameter which corresponds to the ideal shape, acts as an indicator for the present deviation between the actual shape and the ideal shape.

Other objects and features of the present invention will become apparent from the following detailed description considered in conjunction with the accompanying drawings. The drawings, however, are only principle sketches designed solely for the purpose of illustration and do not limit the invention. The drawings show:
Fig. 1 A wind turbine comprising a component being a blade pitch bearing, wherein a method according to an embodiment of the present invention is performed in the context of a quality control of the component,
Fig. 2 a detailed view of the component being the blade pitch bearing of the wind turbine of fig. 1,
Fig. 3 a flow diagram of the method according to the embodiment of the present invention,
Fig. 4 an arrangement comprising the component and a 3D-scanner for gaining geometry data in context of the method of fig. 3,
Fig. 5 a diagram with data points being the geometry data,
Fig. 6 a diagram with data points being adjusted geometry data obtained by the geometry data of fig. 5,
Fig. 7 a diagram with a data subset obtained by the adjusted geometry data of fig. 6 together with points of a best fit function, and
Fig. 8 a diagram with the best fit results for several data subsets.

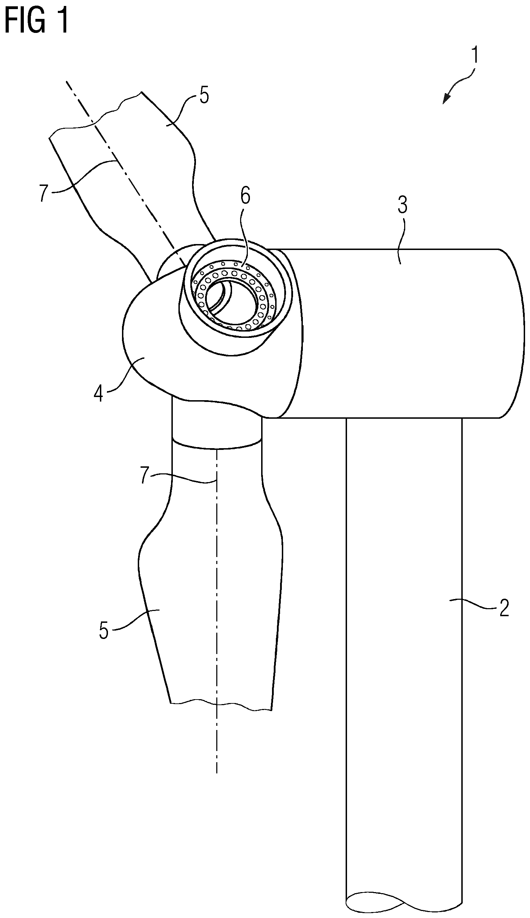

Fig. 1 shows a principal sketch of a wind turbine 1 comprising a tower 2, wherein on top of the tower a nacelle 3 is arranged. Furthermore, the wind turbine 1 comprises a hub 4, on which several, namely three, blades 5 are arranged. For harvesting wind energy, the blades 5 interact with wind which in turn causes the hub 4 to rotate, wherein this rotation is transferred to a generator which is located within the nacelle 3.

In fig. 1, one of the blades 5 is skipped such that a bearing 6 of the wind turbine 1 being a contact ball bearing becomes visible. Alternatively, the bearing 6 can be a contact roller bearing. Concretely, the bearing 6 is a blade pitch bearing which acts as a mechanical interface between the hub 4 and the respective blade 5. The bearing 6 allows for rotating or tilting the respective blade 5 around its longitudinal axis 7.

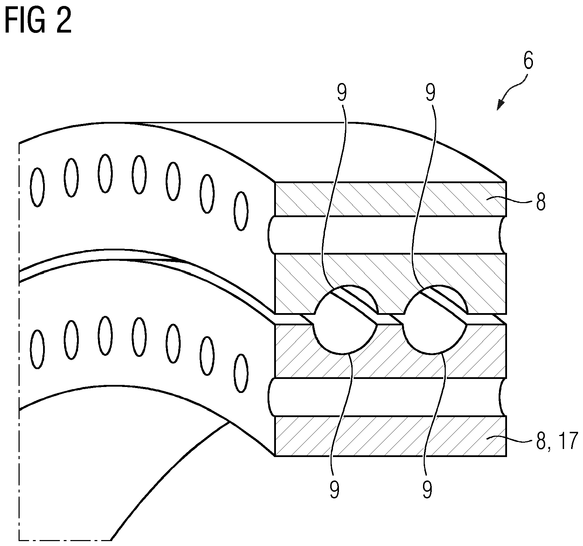

Fig. 2 shows an enlarged, three-dimensional and cut view of the bearing 6. The bearing 6 comprises two rings 8, namely an inner ring 8 and an outer ring 8. The rings 8 are arranged concentric to each other, wherein on an outer surface of the inner ring 8 and on an inner surface of the outer ring 8 face each other. On each of these surfaces, two adjacent raceways 9 are provided which can be named as guiding grooves. Balls, which are not shown in the figures, are arranged between two opposed raceways 9. Each of the raceways 9 extents along the circumference of the respective ring 8. The two raceways 9 of each of the rings 8 extend parallel to each other. Hence, the rings 8 can rotate around each other, wherein one of the ring 8 is connected with the hub 4 and the other ring 8 is connected with the blade 5.

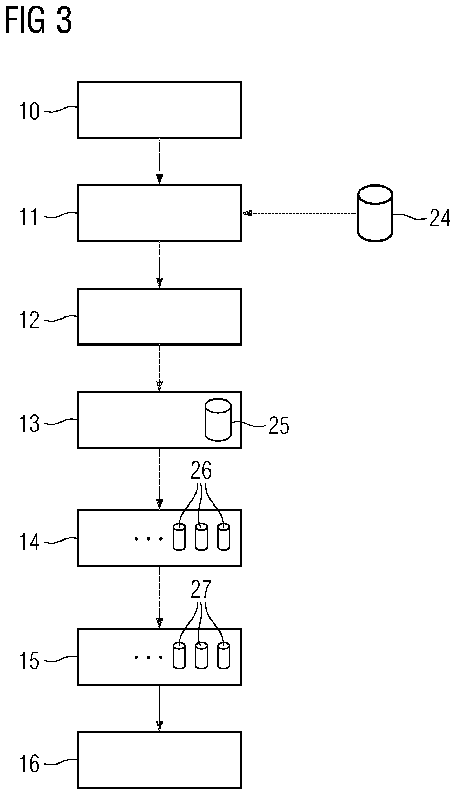

Next, an embodiment of a method according to the present invention is described. Fig. 3 shows a flow chart of this method, wherein the concrete embodiment of this method comprises the steps 10 to 16. The aim of the method is to perform a quality control of a component 17 of the wind turbine 1 to be produced, wherein the component 17 is a member or the bearing 6, namely the inner ring 8. The respective method can also be applied to other components of the wind turbine 1, particularly to the outer ring 8.

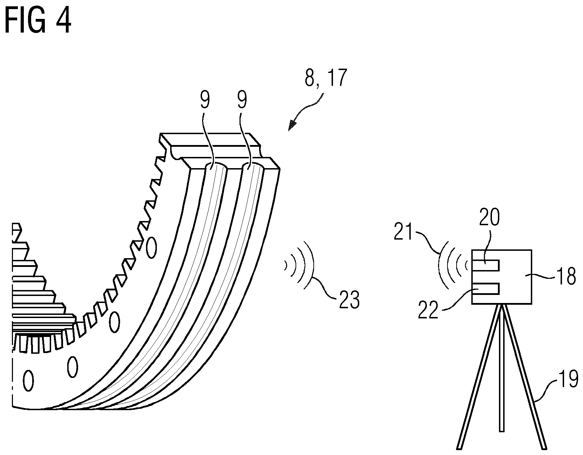

Regarding the first step 10 of the method, the inner raceway 8 or component 17, respectively, and a non-contact 3D-scanner 18 are provided. Exemplarily, the portable 3D-scanner 18 is mounted on a stand 19 being a tripod, wherein the 3D-scanner 18 is arranged beside the component 17. Theis situation is shown in fig. 4, wherein only a part of the ring 8 is displayed. Instead of being mounted on the stand 19, the 3D-scanner 18 can be handheld by personnel during the subsequent procedure.

According to the present embodiment, the 3D-scanner 18 is an active scanner but can be also a passive scanner. Basically, the 3D-scanner 18 can be an optical scanner or a laser scanner. Referring to the situation shown in fig. 4, the 3D-scanner 18 is an active laser scanner. The 3D-scanner 18 comprises a radiation source 20 being a laser source, wherein, during the next step 11 of the method, respective laser radiation 21 is emitted by the radiation source 20. The emitted radiation 21 is reflected by the component 17, wherein a radiation- or laser detector 22 of the 3D-scanner 18 detects the reflected radiation 23. By performing a pulse transit time- and a phase difference-analysis, geometry data 24 which provide a 3D-model of the actual shape of the component 17 are obtained and transferred to a computer for further processing.

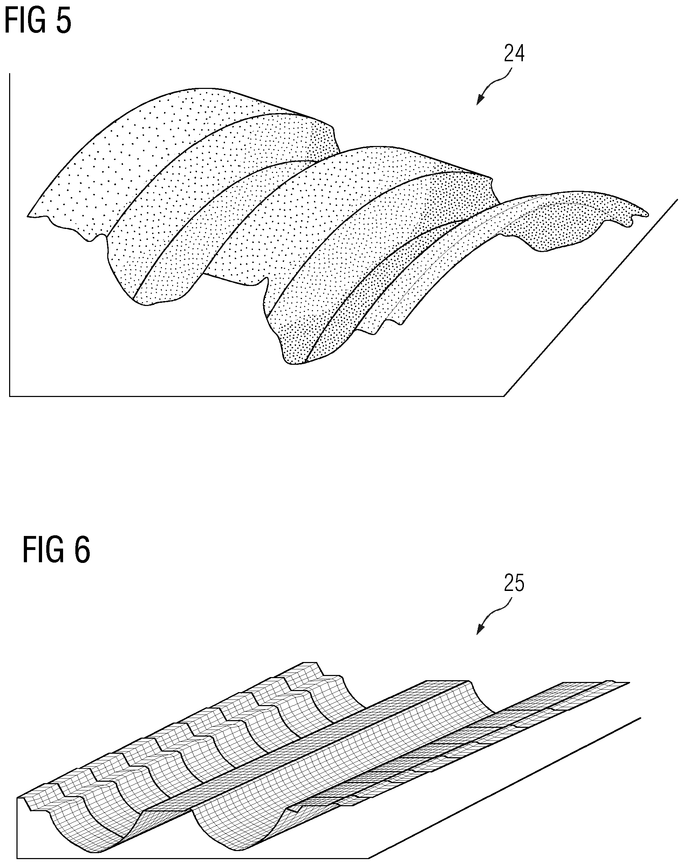

Next, it is referred to fig. 5 which shows a diagram or coordinate system with the geometry data 24. The 3D-model provided by the geometry data 24 consists of a point cloud. Additionally or alternatively, the geometry data 24 or 3D-model, respectively, can consist of a polygon mesh. As it becomes apparent from fig. 5, the shape of the point cloud corresponds to the actual or real shape of the component 17, wherein particularly the raceways 9 become visible. Thus, the geometry data 24 provide a 3D-model of the section of the ring 8 which comprises the raceways 9 such that the geometry data 24 provide the geometric shape of the raceways 9.

In the next step 12, the geometry data 24 are subjected to a coordinated transformation such that the point of origin of the coordinate system corresponds to the central point of the ring 8. In other words, the axes of the coordinate system, on which the geometry data 24 are based, are shifted.

Regarding the next step 13, the geometry data 24 are transformed into adjusted geometry data 25. The adjusted geometry data 25 provide an adjusted 3D-model of the component 17 or raceway 9, respectively. For transforming the geometry data 24 into the adjusted geometry data 25, the circumferential rounding which extends along the longitudinal direction of the raceways 9 is removed or, more precisely, turned into a straight extent. In other words, the geometry data 24 are adjusted such that a circumferential line of the ring 8 or raceways 9, respectively, is turned into a straight line, wherein the relative positions between the points of the point cloud and the points of the respective line are retained. The result of this coordinated transformation, hence, the adjusted geometry data 25, is shown in fig. 6 which shows a diagram or coordinate system with the adjusted geometry data 25. As it becomes apparent, the adjusted geometry data 25 consist of data points arranged on a grid having a specified and equally or evenly distributed resolution.

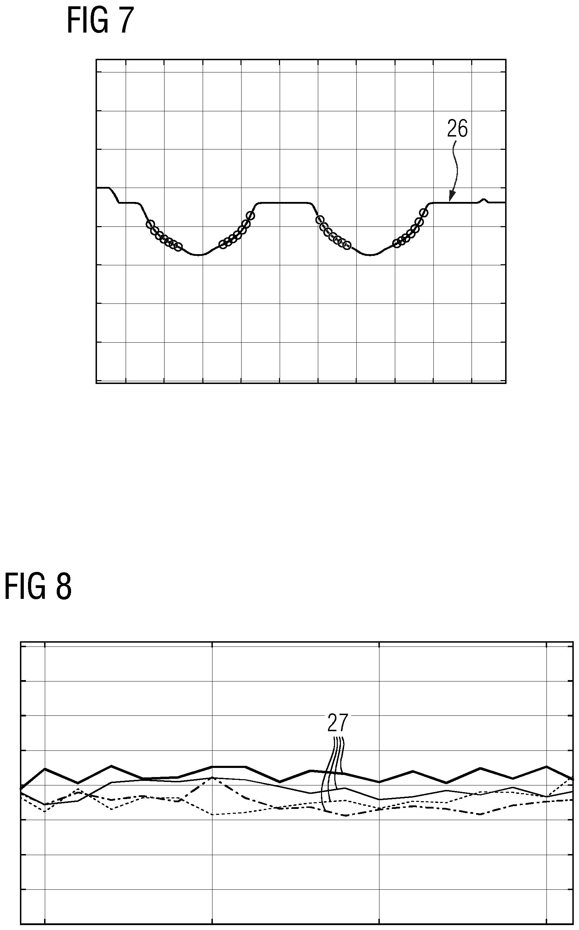

Next, during step 14, several data subsets 26 are extracted from the adjusted geometry data 25. Each of the data subsets 26 provides a 2D-model of the shape of the cross-section of the ring 8 or of the raceways 9, respectively. Concretely, the data subsets 26 provide cross-sectional cuts through the ring 8 or through the raceways 9, respectively, wherein these cuts are arranged equally spaced along the longitudinal extent of the raceways 9 and, hence, along the circumferential extent of the ring 8. Fig. 7 shows a diagram or coordinate system with one of the data subsets 26.

Next, in step 15, a function which describes the ideal shape of the of the component 17 or raceways 9, respectively, is fitted to each of the data subsets 26, wherein the best fit results 27 are obtained. The best fit function is indicated by small circles in fig. 7. The function is defined section by section and describes the ideal cross-sectional shape of the raceways 9, namely a circle each. For the case of the component 17 being a member of the contact roller bearing, the function can describe rectangles. Each of the best fit results 27 comprises the best fit parameters, e.g., the radii and central points of the fitted circles, and the respective chi-square value.

Next, in step 16, a diagram which is shown in fig. 8 is output to evaluate the result of the quality control. In this diagram, the best fit results 27 are shown. Concretely, the values of the best fit parameters and of the chi-square are plotted against the position of the respective data subsets 26 regarding the longitudinal extent of the raceways 9 and, hence, the circumferential extent of the ring 8. Positions where a large unevenness of the profile of the raceway 9 is present can be identified by the position on the x-axis of this diagram where large deviations between the best fit results 27 and respective values which are expected for the ideal shape are present and/or where the value of the chi-square is large or exceeds a given threshold value, respectively.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for performing a quality control of a component (17) of a wind turbine (1) to be produced, wherein geometry data (24) which provide a 3D-model of an actual shape of at least a part of the component (17) are collected using a measuring device (18) being a non-contact 3D-scanner, wherein deviations between the actual shape and an ideal shape of the at least one part of the component (17) are detected using the geometry data (24).

2. Method according claim 1, **characterized in that** the component (17) is a bearing (6) or a member of a bearing (6) of the wind turbine.

3. Method according claim 2, **characterized in that** the bearing (6) is a blade pitch bearing, a main bearing or a yaw bearing.

4. Method according to claim 2 or 3, **characterized in that** the member of the bearing (6) being the component (17) is a ring (8) of a contact ball bearing or of a contact roller bearing.

5. Method according to claim 4, **characterized in that** the ring comprises at least one raceway (9) which extends along a circumference of the ring (8), wherein the geometry data (24) provide the 3D-model of the shape of the ring (8) at least for a section of the ring (8) where the at least one raceway (9) is arranged.

6. Method according to claim 5, **characterized in that** the ring (8) comprises two raceways (9) which extend parallel to each other.

7. Method according to one of the preceding claims, **characterized in that** the 3D-scanner (18) used is an optical scanner or a laser scanner.

8. Method according to one of the preceding claims, **characterized in that** the 3D-scanner (18) is handheld or mounted on a stand (19) during the collection of the geometry data (24).

9. Method according to one of the preceding claims, **characterized in that** the geometry data (24) or data obtained by the geometry data (24) consists of a point cloud and/or a polygon mesh.

10. Method according to claim 9, **characterized in that** the point cloud consist of data points which are arranged on a grid having a specified, particularly equally distributed, resolution.

11. Method according to one of the preceding claims, **characterized in that** the geometry data (24) which provide the 3D-model of the actual shape of at least a part of the component (17) being ring-like are transformed into adjusted geometry data (25), wherein the adjusted geometry data (25) provide an adjusted 3D-model of the actual shape of at least a part of the component (17), wherein, for transforming the geometry data (24) into the adjusted geometry data (25), a circumferential rounding of the component (17) is turned into a straight extent.

12. Method according to one of the preceding claims, **characterized in that** at least one data subset (26) which provides a 2D-model of the shape of at least a part of the cross section of the component (17) is extracted from the geometry data (24) or from data obtained by the geometry data (24), wherein the deviations are detected using the at least one data subset (26).

13. Method according to claim 12, **characterized in that** several data subsets (26) are extracted, wherein the data subsets (26) provide 2D-models of the shape of at least a part of the cross sections of the component (17) along a certain dirction, particularly a longitudinal extent, of the component (17).

14. Method according to one of the preceding claims, **characterized in that** a function which describes the ideal shape is fitted to the geometry data (24) or to data obtained by the geometry data (24), wherein the results (27) for the best fit are used to obtain the deviations.

15. Method according to claim 14, **characterized in that** the deviations are obtained by the deviations between the geometry data (24) or the data obtained by the geometry data (24) and the best fit function and/or by at least one best fit result (27) of the best fit function.
